# EUROPEAN PATENT SPECIFICATION

(11) **EP 0 551 744 B1**
(45) Date of publication and mention of the grant of the patent: **20.05.1998**
(21) Application number: 92311468.0
(22) Date of filing: 16.12.1992
(51) Int. Cl.: G11B 7/24, G11B 7/26

(54) **Optical disc and method for manufacturing the same**
Optische Scheibe und Verfahren zur Herstellung derselben
Disque optique et sa méthode de fabrication

(30) Priority: 16.12.1991 JP 331805/91
(43) Date of publication of application: 21.07.1993
(73) Proprietor: SHARP KABUSHIKI KAISHA, Osaka (JP)
(72) Inventor: Ohta, Kenji, Kitakatsuragi-gun, Nara-ken (JP); Inui, Tetsuya, Nara-shi, Nara-ken (JP); Nagaura, Toshikazu, Nara-shi, Nara-ken (JP)
(74) Representative: Brown, Kenneth Richard

(56) References cited:
- EP-A- 0 443 522
- DE-A- 3 839 536
- DE-U- 8 815 125
- PATENT ABSTRACTS OF JAPAN vol. 15, no. 426 (P-1269) 26 October 1991 & JP-A-31 76 832
- PATENT ABSTRACTS OF JAPAN vol. 16, no. 96 (P-1322) 10 March 1992 & JP-A-32 73 537
- PATENT ABSTRACTS OF JAPAN vol. 13, no. 361 (P-917) 11 August 1989 & JP-A-11 19 934
- PATENT ABSTRACTS OF JAPAN vol. 14, no. 345 (P-1083) 26 July 1990 & JP-A-21 235 334

## Description

### BACKGROUND OF THE INVENTION

### 1. Field of the Invention

The present invention relates to an optical memory element for recording, reproducing, erasing information using a laser beam and its manufacturing method, and more particularly, to an optical disc having antistatic properties and its manufacturing method.

### 2. Description of the Related Art

Recently, there has been much research and development of an optical memory element of a high recording density and a large capacity. A glass and transparent resins are suitable for substrates of the optical memory element and especially polycarbonate is preferably suitable among the resins, because it has a good productivity and moisture resistance.

However, the polycarbonate substrate easily attracts dust to its surface because it is easily electrically charged owing to its high surface resistance of 10¹⁶ Ω/□. In an optical disc memory, a beam is focused on a recording film in the order of µm through the transparent substrate of approximately 1.2mm thickness made of glass or transparent resins. Therefore, it is generally thought that the focused Beam is not affected by the dust on the transparent substrate. But in actual fact, the dust acts a lot on recording and erasing of a magneto-optical disc, though it has little effect on playback of a Compact Disc as mentioned above. This is because a lot of energy is consumed in recording and erasing as compared with playback, and the dust causes to scatter the beam on the substrate surface and make a recording or/and erasing error as a result of energy power shortage.

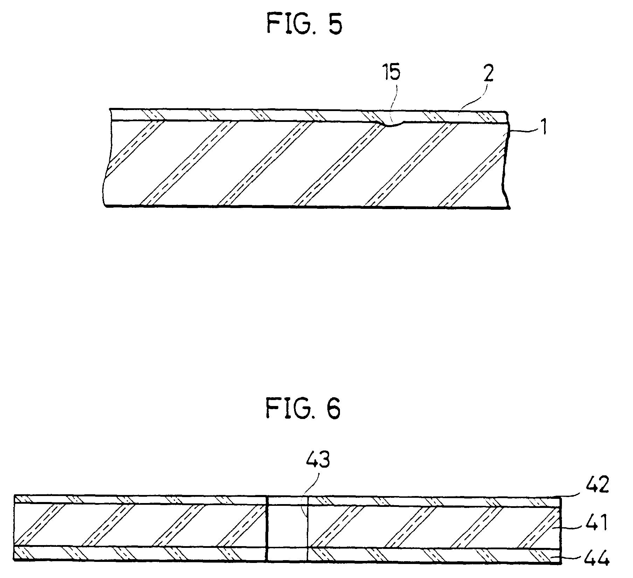

In order to prevent the beam from scattering as shown Fig. 6, an optical disc is proposed to be covered with an antistatic layer 42 where a metal oxide is dispersed as electro-conductive filler in acrylic resin layer (Japan Unexamined Patent No. 158643/1989). In addition, a recording layer 44 is formed on a back surface of the polycarbonate substrate 41.

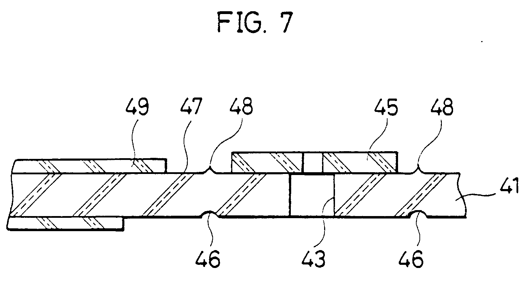

But Fig. 6 is a schematic view showing the optical disc. In actual fact, both surfaces of the polycarbonate substrate 41 are not even as shown in Fig. 7. More specifically, annular ridge 48 and groove 46 are formed at an inner circumference on the front and back surfaces of the polycarbonate substrate 41, respectively corresponding to a gap or a swelling in a joint between parts of a mold for injection machine. In addition, a height of the ridge 48 and a depth of the groove 46 are not uniform in the circumferential direction. A centering part 45 called a center hub is bonded on an inner hole 43 of the optical disc. The ridge 48 and the groove 46 are formed in the vicinity of outer circumference of the centering part 45.

An antistatic layer is spin-coated on the surface of the polycarbonate substrate 41. A density of the antistatic layer changes in the circumferential direction corresponding to a distribution of ridge height 48 or the groove depth 46. As a result, antistatic layer changes in its thickness in the circumferential direction, causing to shift the focused optical beam offset, disturb a servo signal of recording, reproducing and erasing, and decrease the effective power of the optical beam.

When an antistatic layer 49 is formed outside the ridge 48 as shown in Fig. 7 in order to prevent wide distribution of the film thickness of the antistatic layer, dust is gathered at an exposed portion 47 where the antistatic layer 49 does not exist. Although the exposed portion 47 serves to provide a reference surface when the optical disc is mounted on a drive apparatus, the reference surface cannot be provided or the polycarbonate substrate 41 is damaged if the dust exists on the exposed portion 47.

In addition, the centering part 45 and the polycarbonate substrate 41 are formed of the same material so that their adhesive state may not be suffered from a different expansion nor shrinkage by heat. More specifically, the centering part 45 is also formed of polycarbonate. Since an antistatic means is not taken in the prior art, the dust is also attached to the centering part 45. As a result, the dust is piled together on the surface of the optical disc owing to peeling from centering part 45 by a vibration of the disc or the like and causes to disturb the servo signal and decrease the effective power of the optical beam.

### SUMMARY OF THE INVENTION

The present invention, is defined by the appended claims.

### BRIEF DESCRIPTION OF THE DRAWINGS

Fig. 1 is a vertical sectional view showing a main portion of an optical disc according to the present invention;
Fig. 2 is an expanded vertical sectional view showing a part of the optical disc shown in Fig. 1;
Fig. 3 is a vertical sectional view showing a main portion of another optical disc according to the present invention;
Fig. 4 is a vertical section view showing a main portion of an optical disc which is useful for understanding the present invention;
Fig. 5 is a vertical section view showing a main portion of another optical disc which is useful for understanding the present invention;
Fig. 6 is a schematic vertical sectional view showing a conventional optical disc; and
Fig. 7 is a vertical sectional view showing a main portion of the conventional optical disc.

### DETAILED DESCRIPTION OF THE INVENTION

The optical disc according to the present invention may be any one of a magneto-optical disc, a compact disc, a write once type disc and a photochromic type disc which are all well known.

The recording film, the protective film, the moisture resistance film for protecting moisture transmission, and the antistatic film formed on the optical disc will be described hereinafter.

The plastics substrate having light transmission properties according to the present invention is formed by normal injection molding. A material of the substrate may be plastics which has light transmission properties and is not likely to be distorted. Typically, polycarbonate is suitable. Another material such as acrylic resin or epoxy resin may be also suitable for the substrate. A thickness of the substrate is normally 1.15 to 1.25mm.

Since the plastics substrate is formed by the injection molding, a joint between parts of a mold is generated. Although a position of the joint varies with a design of the mold, normally it is between 1/10 and 4/5 of the radius of the substrate. A U-shaped groove or ridge is formed in whole circumference corresponding to the position of the joint. The groove or the ridge may be formed by using a mold which is designed to provide it on a predetermined position, or may be shaped on the joint position of the plastics substrate after the injection. In a case of the groove, the joint is positioned in the middle the groove. A dimension of the groove in cross section is preferably as follows. That is, a width of an opening is approximately 1.5 to 2.5mm, a width of bottom is approximately 0.7 to 1.3mm and a depth is approximately 0.1 to 0.2mm. Meanwhile, a dimension of the ridge in cross section is preferably as follows. That is, a width of bottom is approximately 1.5 to 2.0mm, a width of top is approximately 0.7 to 1.3mm, and a height is approximately 0.3 to 0.7mm.

The recording film is formed on one surface of the plastics substrate by spin coating, roll coating, sputtering, or other coating methods. The structure of the recording film is well-known in the prior art. Typically, there is a four-layer structure such as AlN/GdTbFe/AlN/Al or AlN/DyFeCo/AlN/Al or a three-layer structure such as SiN/TbFeCo/SiN or SiAlON/TbFeCo/SiAlON. The film thickness thereof is normally 150 to 300nm. Although the recording film is formed on the whole surface of the plastics substrate, it may be formed partially thereon.

In addition, the recording film serves as not only the magneto-optical medium but also a medium of read only, write once, phase transition or photochromic type.

The protective film is formed on the recording film by spin coating, roll coating, or other coating methods. The protective film mainly protects the recording film, which may be formed of acrylic urethane UV curing resin, polyvinylidene chloride resin, poly-trifluoride ethylene chloride resin or the like. The film is formed by coating those. Its film thickness is normally 2 to 20µm.

In addition, the moisture resistance film is optionally formed on the other surface of the plastics substrate to which the optical beam is applied by spin coating, roll coating, vapor deposition, sputtering or the like. The moisture resistance film may be formed of an inorganic material such as AIN, SiN, ZnS, Al₂O₃, SiO₂, SiAlON or an organic material such as polyvinylidene chloride resin or poly-trifluoride ethylene chloride resin. Among them, AlN is especially preferable. A thickness of that film varies with the material. Generally, the thickness of the film formed of the inorganic material ranges from 1 to 300nm, preferably 1 to 200nm. Alternatively, the thickness of the film formed of the organic material ranges from 2 to 20µm, preferably 2 to 15µm. For example, in a case of AIN, it preferably ranges from 1 to 20nm. Within the above range of the film thickness, transient warp on change in humidity can be prevented and also an interference band of the optical disc can be prevented.

In addition, the antistatic resin film mixed with an electro-conductive filler is formed on the other surface of the substrate or on the moisture resistance film optionally formed on the other surface to which the optical beam is applied. The antistatic resin film mixed with the electro-conductive filler can be formed by mixing a synthetic resin or its raw material with the transparent electro-conductive filler in a predetermined ratio and, if necessary, adding an inorganic filler a little to improve the hardness, and coating them onto the substrate. As the synthetic resin, for example, acrylic urethane UV curing resin, acrylic UV curing resin or the like is suitable.

The film is formed by coating onto the substrate by, for example spin coating, curing by means such as UV ray irradiation, heating and cooling. The method of forming film may be varied according to the synthetic resin employed. In a case where the U-shaped groove is provided in the substrate, a liquid synthetic resin is coated to the outer circumference of the groove on the substrate surface by rotation, then coated to the inner circumference of the groove on the substrate surface by further rotation, and finally the groove is filled up to be nearly even. It is preferable that the rotational speed while the liquid synthetic resin is coated to the outer circumference is approximately 2,000 to 4,000rpm, the rotational speed while it is coated to the inner circumference is approximately 300 to 800rpm and the rotational speed while the groove is filled up is approximately 20 to 80rpm. At this time, the rotational speed during the coating onto the inner circumference has to be lower than that during the coating onto the outer circumference. If the rotational speed during the coating onto the inner circumference is higher than that during the coating onto the outer circumference, the liquid synthetic resin for the inner circumference overflows to the outer circumference beyond the groove, which causes to take place a bad influence on uniformity of the antistatic film thickness.

The film thickness is preferably 1 to 20µm. The antistatic resin film contains a transparent electro-conductive filler and prevents the dust from being attached onto the surface of the optical disc and also prevents damage from being generated, and it is preferable that its film surface has high hardness and relatively low surface resistance. The hardness is preferably HB or more in pencil hardness. In addition, the surface resistance is preferably approximately 10¹³Ω/□ or less.

The transparent electro-conductive filler preferably comprises tin oxide doped with phosphorus because light transmission properties and stability can be provided at the same time. In addition, doping of phosphorous, such as phosphoric acid or sodium phosphate, to the tin oxide is performed by coprecipitation and sintering from a liquid phase. A doping amount into the tin oxide is preferably 3 to 7wt% of the whole amount of the electro-conductive filler. If the doping amount is less than 3wt%, the electro-conductivity becomes poor and its stability becomes also poor. It is preferable that the content of the electro-conductive filler in the antistatic film is about 25 to 45wt% and the average particle diameter of the filler is 0.15µm or less. If the content of the filler is less than 25wt%, the surface resistance exceeds 10¹³Ω/□, so that sufficient antistatic performance can not be obtained. If the content of the filler exceeds 45wt% or the average particle diameter is larger than 0.15µm, surface roughness of the film is increased and then the light transmission properties become poor.

Although the optical disc according to the present invention is typically a magneto-optical disc, it may be a compact disc, a write once type disc and a photochromic type disc using a photochromic material as the recording film.

### EXAMPLE

### Example 1

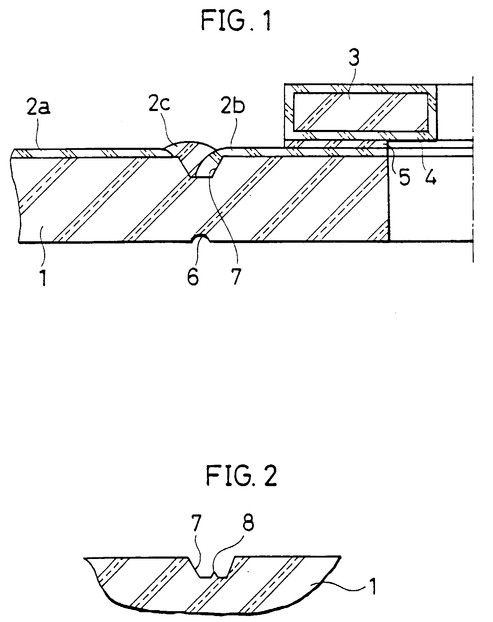

An embodiment of the present invention will be described in reference to Figs. 1 and 2.

Reference numeral 1 designates a substrate formed of polycarbonate, reference numeral 2a designates an outer circumferential portion of an antistatic film, reference numeral 2b designates an inner circumferential portion of the antistatic film, reference numeral 2c designates the antistatic film formed on the groove, reference numeral 3 designates a positioning part, reference numeral 4 designates another antistatic film, reference numeral 5 designates an adhesion layer, reference numeral 6 designates a small groove generated by a joint on the other surface of the polycarbonate substrate, reference numeral 7 designates a U-shaped groove on one surface of the polycarbonate substrate according to the present invention, and reference numeral 8 designates a ridge generated by the joint on one surface of the polycarbonate substrate.

As shown in Fig. 1, the antistatic layers 2a to 2c are formed on one surface of the polycarbonate substrate 1 onto which a laser beam used for recording, reproducing and erasing is applied, and a recording layer (not shown) is formed on the other side of the substrate. The small groove 6 and the U-shaped groove 7 are formed on the back surface and on the front surface of the polycarbonate substrate 1, respectively at a position corresponding to the joint between parts of the mold used for injection of the polycarbonate substrate 1. A width of an opening of the groove 7 is approximately 2 mm, a width of a bottom thereof is approximately 1mm, and a depth thereof is approximately 0.1 to 0.2 mm. In addition, the small ridge 8 is formed by the joint in the bottom thereof as shown in Fig. 2.

Steps of forming the antistatic layers 2a to 2c will be described hereinafter. First, an antistatic agent is applied outside the groove 7 by spinning to form the antistatic layer 2a. The rotational speed may be set high, for example 3000rpm in order to form the thin and uniform antistatic layer 2a. In addition, a mixture of the UV curing resin and a filler of tin oxide doped with phosphorus is used as the antistatic agent.

Then, the antistatic agent is coated inside the groove 7 by spinning to form the antistatic layer 2b. Since it is important that the antistatic layer 2b does not overflow beyond the large groove 7 rather than it is uniformly formed, the rotational speed at that time is set low, for example 500rpm.

Finally, the antistatic agent is coated in the groove 7 at considerably low speed, that is, several tens rpm to form the antistatic layer 2c, whereby the antistatic layer 2a and the antistatic layer 2b are made even by coating the antistatic layer 2c on the groove 7 and then they are electrically conductive. Thus, the groove 7 takes an active part as a barrier of the antistatic agent fluid.

In the above embodiment of the present invention, the antistatic layer 2a has to be coated before the antistatic layer 2b is coated. That is, when the antistatic layer 2b is coated, the antistatic agent sometimes partially overflows beyond the large groove 7. If the antistatic layer 2a is coated onto the overflowed layer, the film thickness of the antistatic layer 2a is not even, which causes a servo-mechanism disturbed.

Then, the center hub 3 of polycarbonate is covered with the antistatic layer 4 as same material as the antistatic layers 2a to 2c and bonded to the antistatic layer 2b through the electro-conductive adhesion layer 5. As the electro-conductive adhesion layer 5, an electro-conductive adhesive in which tin oxide is mixed in the UV curing resin (ELCOM p3555 made by CATALYSTS & CHEMICALS INDUSTRIES CO., LTD.) is employed.

As described above, since the small ridge 8 is formed in the groove 7 as the result of the joint and the antistatic layers 2a, 2b and 2c are formed in this order, the antistatic layer 2a to which the optical beam for recording, reproducing and erasing is applied can be uniformly formed. Furthermore, since the antistatic layer 2b is formed on a reference surface when the optical disc is attached onto a drive apparatus, the dust is not attached onto the reference surface.

If the antistatic agent is doped with phosphorus, transparency of the antistatic layers is improved and the surface resistance of the antistatic layer becomes small (approximately 10¹⁰Ω/□). Especially, when the UV curing resin is used as the antistatic agent, its transparency is important and doping of phosphorus is effective.

### Example 2

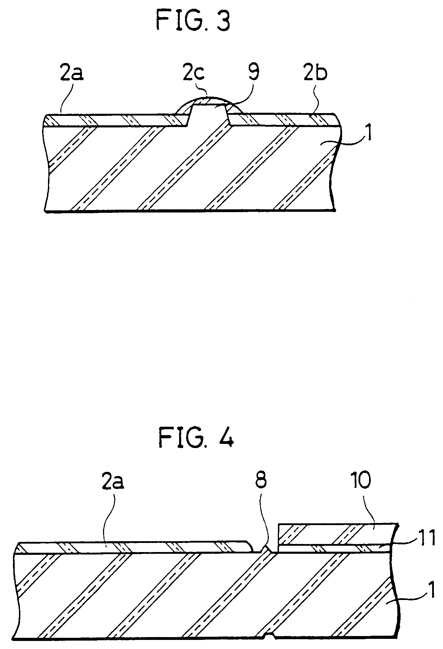

Another embodiment of the present invention will be described hereinafter in reference to Fig. 3. Parts having the same functions as in the above embodiment are denoted the same reference numeral as above and the description thereof will be omitted. Reference numeral 9 designates a ridge.

The U-shaped ridge 9 is formed on the surface of the polycarbonate substrate 1 at a part corresponding to the joint of the mold as shown in Fig. 3. A width of the ridge is approximately 1mm, a height thereof is approximately 0.5mm. The antistatic layers 2a, 2b and 2c are coated to the outer and the inner circumference and on the ridge 9, respectively by spinning. Conditions of the above coating are the same as described in the above Example 1.

As described above, the ridge 9 serves as a barrier for preventing fluid of the antistatic layer 2b from overflowing toward the antistatic layer 2a when the antistatic layer 2b is coated. Similarly to the Example 1, the antistatic layers 2a and 2b are electrically conductive through the antistatic layer 2c.

When the surface resistance of the antistatic layers 2a to 2c according to the present invention is approximately 10¹³Ω/□, even if the antistatic layer 2c is not provided, this does not affect their antistatic faculty. However, when the surface resistance is in the order of 10¹⁰Ω/□, if there is not provided the antistatic layer 2c to make electrically conductive passage to the outside through the center hub 3, their antistatic faculty becomes poor.

In order to make electrically conductive passage to the outside, a cartridge for housing the optical disc is formed of electro-conductive polycarbonate and the antistatic layers 2a to 2c are provided on the optical disc, whereby the whole surface is electro-conductive. Thus, there is no potential difference between the optical disc and the outside when the cartridge is carried.

Although the optical disc normally floats during rotation by the drive unit, the potential difference between the optical disc and the outside is reconciled through the center hub 3.

Furthermore, if an electro-conductive brush is provided within the cartridge in contact with the surface of the optical disc during rotation, the antistatic effect becomes more conspicuous.

In addition, when the antistatic layer 2b is coated by the brush or formed by screen printing process on the inner circumference after the antistatic layer 2a is coated by spinning according to the Examples 1 and 2, although uniformity of the antistatic layer 2b is not obtained, sufficient characteristics as the antistatic layer according to the present invention can be obtained.

### Example 3

According to this example, not being an embodiment of the present invention, an electro-conductive film is employed instead of the antistatic layer used in the above Examples 1 and 2. Figs. 4 and 5 show an example. The same reference numeral as the above is not described here. Reference numeral 10 designates an electro-conductive film, reference numeral 11 designates an electro-conductive adhesion layer, and reference numeral 15 designates a part corresponding to the joint between parts of the mold. As shown in Fig. 4, instead of the antistatic layer 2b, the electro-conductive film 10 may be adhered to a region inside the small ridge 8 through the electro-conductive adhesion layer 11. The electro-conductive film 10 is formed of an ITO (oxide of indium and tin whose thickness is approximately 0.07µm) on a polyester film (whose thickness is approximately 50µm). As the electro-conductive adhesion layer 11, the electro-conductive adhesive, which is the same as the electroconductive adhesive used in the Example 1, in which tin oxide is mixed with the UV curing resin (ELCOM p3555 made by CATALYSTS & CHEMICALS INDUSTRIES CO., LTD.) is used.

The center hub 3 at the inner circumference of the optical disc according to the Examples 1 to 3 may be formed by injecting a resin in which a cationic antistatic agent is mixed in polycarbonate. In this case, if the ridge is provided on an adhesive surface of the center hub 3 and the center hub 3 is welded to the optical disc by supersonic wave, the electro-conductive adhesion layer 5 may be omitted.

Since the small ridge 8 shown in Fig. 4 is so small, the part 15 corresponding to the joint can be made almost even by only rubbing it with alumina of 0.5µm several times as shown in Fig. 5. Then, the antistatic agent is applied from the inner circumference by spinning. Thus, the uniform antistatic layer is formed.

As described above, according to the optical disc, an groove is formed at a position on a plastics substrate corresponding to the joint so as to take an active part as a barrier of a liquid material fluid coated to the plastics substrate.

Therefore, since the surface of the plastics substrate is separated to an outer and an inner circumferential region by the groove or ridge, the liquid material can be coated to each region without being affected by the joint between parts of the mold for injection. In addition, since the groove takes an active part as a barrier of the liquid material fluid when the liquid material is coated to the inner circumferential region by, for example spin coating, the liquid material coated to the inner crcumferential region is prevented from overflowing to the outer circumferential region.

Furthermore, dust is prevented from being attached onto the surface of the positioning part, whereby recording and reproducing reliability of the optical disc can be improved. Still further, transparency of the antistatic layer can be improved by doping the tin oxide filler with phosphorus.

## Claims

1. An optical memory disc comprising a light-transmissive disc-shaped substrate (1) of injection-molded plastics material, a recording film formed on one surface of said substrate, and an anti-static film (2) formed on the other surface of said substrate, characterised in that said other surface includes a circumferential groove (7) or ridge (9) deliberately formed on the substrate at the position of a joint between different parts of the mold where a defect ridge (8) would otherwise be formed in said other surface, said anti-static film including first and second portions (2a,2b) separately coated on respective portions of said other surface lying radially outwardly and inwardly of said circumferential groove (7) or ridge (9), said anti-static film portions having at least a predetermined surface resistance for said disc to have an effective anti-static faculty.

2. An optical disc according to claim 1, wherein said first and second portions (2a,2b) of said anti-static film extend up to said circumferential groove (7) or ridge (9) and wherein a third portion (2c) of the anti-static film is separately formed in the groove (7) or on the ridge (9) and is in contact with the radially inner edge of said first portion (2a) and with the radially outer edge of said second portion (2b).

3. An optical memory disc comprising a light-transmissive disc-shaped substrate (1) of injection-molded plastics material, a recording film formed on one surface of said substrate, and an anti-static film (2) formed on the other surface of said substrate, characterised in that said other surface includes a circumferential groove (7) or ridge (9) deliberately formed on the substrate at the position of a joint between different parts of the mold where a defect ridge (8) would otherwise be formed in said other surface, said anti-static film including first and second portions (2a,2b) separately coated on respective portions of said other surface lying radially outwardly and inwardly of said circumferential groove (7) or ridge (9) and wherein a third portion (2c) of the anti-static film is separately formed in the groove (7) or on the ridge (9) and is in contact with the radially inner edge of said first portion (2a) and with the radially outer edge of said second portion (2b).

4. An optical disc according to any of claims 1 to 3, further comprising a center hub (3) adhered to said second portion (2b) of the anti-static film on the radially inward portion of said other surface.

5. An optical disc according to claim 4, wherein said center hub (3) is also coated with anti-static film (4) and is bonded to said second portion (2b) of the first-mentioned anti-static film.

6. An optical disc according to any of claims 1-5, wherein said antistatic film (2,4) is formed of a synthetic resin to which tin oxide doped with phosphorus is added as an electro-conductive filler.

7. An optical disc according to any of claims 1 to 6, wherein an opening width of said circumferential groove (7) is 1.5 to 2.5 mm, a bottom width thereof is 0.7 to 1.3 mm and a depth thereof is 0.1 to 0.2 mm.

8. An optical disc according to any of claims 1 to 6, wherein a bottom width of said circumferential ridge (9) is 1.5 to 2.0 mm, a top width thereof is 0.7 to 1.3 mm and a height thereof is 0.3 to 0.7 mm.

9. A method of manufacturing an optical memory disc using a light transmissive disc-shaped substrate (1) of injection-molded plastics material, the method including forming a recording film on one surface of the substrate and forming an anti-static film (2) on the other surface, said other surface including a circumferential groove (7) or ridge (9) deliberately formed on the substrate at the position of a joint between different parts of the mold where a defect ridge (8) would otherwise be formed in said other surface, wherein the formation of said anti-dust film includes separately coating a liquid synthetic resin onto respective portions of said other surface lying radially outwardly and inwardly of said circumferential groove (7) or ridge (9) by a process which employs said groove or ridge as a barrier to the spreading of said liquid synthetic resin, so as to form respective anti-static film portions (2a,2b) each having at least a predetermined surface resistance.

10. A method of manufacturing an optical memory disc using a light transmissive disc-shaped substrate (1) of injection-molded plastics material, the method including forming a recording film on one surface of the substrate and forming an anti-static film (2) on the other surface, said other surface including a circumferential groove (7) or ridge (9) deliberately formed on the substrate at the position of a joint between different parts of the mold where a defect ridge (8) would otherwise be formed in said other surface, wherein the formation of said anti-static film includes separately coating a liquid synthetic resin (2a,2b) onto respective portions of said other surface lying radially outwardly and inwardly of said circumferential groove (7) or ridge (9) by a process which employs said groove or ridge as a barrier to the spreading of said liquid synthetic resin, and also coating with a liquid synthetic resin (2c) so as to cover said circumferential groove (7) or ridge (9).

11. A method of manufacturing an optical disc according to claim 9 or claim 10, wherein said process comprises coating said liquid synthetic resin (2a) to the portion of said other surface which is radially outward of said circumferential groove (7) or ridge (9) by rotation of the substrate, and then coating the liquid synthetic resin (2b) to the portion of said other surface which is radially inward of said circumferential groove (7) or ridge (9) by further rotation, in which the rotational speed during coating onto the inner portion is lower than that during coating onto the outer portion.

12. A method of manufacturing an optical disc according to any of claims 9 to 11, wherein the rotational speed during the coating onto the inner portion is 300 to 800 rpm and the rotational speed during the coating onto the outer portion is 2000 to 4000 rpm.

## Patentansprüche

1. Optische Speicherplatte mit einem lichtdurchlässigen plattenförmigen Substrat (1) eines Injektionsform-Kunststoffmaterials, einem Aufzeichnungsfilm, der auf einer Oberfläche des Substrates gebildet ist, und einem antistatischen Film (2), der auf der anderen Oberfläche des Substrates gebildet ist, **dadurch gekennzeichnet,** daß die andere Oberfläche eine Umfangsrille (7) oder -erhöhung (9) umfaßt, die bewußt auf dem Substrat an der Stelle einer Verbindung zwischen verschiedenen Teilen der Form gebildet ist, wo eine defekte Erhöhung (8) sonst in der anderen Oberfläche gebildet wird, wobei der antistatische Film erste und zweite Teile (2a, 2b) aufweist, die getrennt auf jeweiligen Teilen der anderen Oberfläche geschichtet sind, radial nach außen und innen von der Umfangsrille (7) oder -erhöhung (9) gelegen, und wobei die antistatischen Filmteile wenigstens einen vorbestimmten Oberflächenwiderstand für die Platte haben, um eine wirksame antistatische Fähigkeit zu zeigen.

2. Optische Platte nach Anspruch 1, bei der die ersten und zweiten Teile (2a, 2b) des antistatischen Filmes sich hinauf bis zu der Umfangsrille (7) oder -erhöhung (9) erstrecken und bei der ein dritter Teil (2c) des antistatischen Filmes getrennt in der Rille (7) oder auf der Erhöhung (9) ausgebildet und in Berührung mit dem radial inneren Rand des ersten Teiles (2a) und mit dem radial äußeren Rand des zweiten Teiles (2b) ist.

3. Optische Speicherplatte mit einem lichtdurchlässigen plattenförmigen Substrat (1) aus Injektionsform-Kunststoffmaterial, einem Aufzeichnungsfilm, der auf einer Oberfläche des Substrates gebildet ist, und einem antistatischen Film (2), der auf der anderen Oberfläche des Substrates gebildet ist, **dadurch gekennzeichnet,** daß die andere Oberfläche eine Umfangsrille (7) oder -erhöhung (9), die bewußt auf dem Substrat an der Stelle einer Verbindung zwischen verschiedenen Teilen der Form gebildet ist, wo eine defekte Erhöhung (8) sonst in der anderen Oberfläche gebildet wird, wobei der antistatische Film erste und zweite Teile (2a, 2b) aufweist, die getrennt auf jeweiligen Teilen der anderen Oberfläche geschichtet sind, radial nach außen und innen von der Umfangsrille (7) oder - erhöhung (9) gelegen, und wobei ein dritter Teil (2c) des antistatischen Filmes getrennt in der Rille (7) oder auf der Erhöhung (9) gebildet und in Berührung mit dem radial inneren Rand des ersten Teiles (2a) und mit dem radial äußeren Rand des zweiten Teiles (2b) ist.

4. Optische Platte nach einem der Ansprüche 1 bis 3, weiterhin mit einer zentralen Nabe (3), die an dem zweiten Teil (2b) des antistatischen Filmes auf dem radial inneren Teil der anderen Oberfläche haftet.

5. Optische Platte nach Anspruch 4, bei der die zentrale Nabe (3) ebenfalls mit einem antistatischen Film (4) beschichtet und mit dem zweiten Teil (2b) des zuerst erwähnten antistatischen Filmes verbunden ist.

6. Optische Platte nach einem der Ansprüche 1 bis 5, bei der der antistatische Film (2, 4) aus einem Kunstharz gebildet ist, dem mit Phosphor dotiertes Zinnoxid als ein elektrisch leitender Füllstoff beigefügt ist.

7. Optische Platte nach einem der Ansprüche 1 bis 6, bei der eine Öffnungsbreite der Umfangsrille (7) 1,5 bis 2,5 mm beträgt, eine Bodenbreite hiervon durch 0,7 bis 1,3 mm gegeben ist und eine Tiefe hiervon 0,1 bis 0,2 mm hat.

8. Optische Platte nach einem der Ansprüche 1 bis 6, bei der eine Bodenbreite der Umfangsrille (9) 1,5 bis 2 mm ist, eine Oberseitenbreite hiervon 0,7 bis 1,3 mm beträgt und eine Höhe hiervon 0,3 bis 0,7 mm hat.

9. Verfahren zum Herstellen einer optischen Platte unter Verwendung eines lichtdurchlässigen plattenförmigen Substrates (1) eines Injektionsform-Kunststoffmaterials, wobei das Verfahren ein Erzeugen eines Aufzeichnungsfilmes auf einer Oberfläche des Substrates und ein Erzeugen eines antistatischen Filmes (2) auf der anderen Oberfläche umfaßt, die andere Oberfläche eine Umfangsrille (7) oder -erhöhung (9) hat, die bewußt auf dem Substrat an der Stelle einer Verbindung zwischen verschiedenen Teilen der Form gebildet ist, wo sonst eine defekte Erhöhung (8) in der anderen Oberfläche gebildet wird, wobei die Erzeugung des antistatischen Filmes ein getrenntes Beschichten eines flüssigen Kunstharzes auf jeweilige Teile der anderen Oberfläche, radial nach außen und innen von der Umfangsrille (7) oder -erhöhung (9) gelegen, durch einen Prozeß umfaßt, der die Rille oder Erhöhung als eine Sperre für das Streuen des flüssigen Kunstharzes ausnutzt, um jeweilige antistatische Filmteile (2a, 2b) zu bilden, die jeweils wenigstens einen vorbestimmten Oberflächenwiderstand haben.

10. Verfahren zum Herstellen einer optischen Platte unter Verwendung eines lichtdurchlässigen plattenförmigen Substrates (1) eines Injektionsform-Kunststoffmaterials, wobei das Verfahren ein Erzeugen eines Aufzeichnungsfilmes auf einer Oberfläche des Substrates und ein Erzeugen eines antistatischen Filmes (2) auf der anderen Oberfläche umfaßt, die andere Oberfläche eine Umfangsrille (7) oder -erhöhung (9) aufweist, die bewußt auf dem Substrat an der Stelle einer Verbindung zwischen verschiedenen Teilen der Form gebildet ist, wo eine defekte Erhöhung (8) sonst in der anderen Oberfläche gebildet wird, wobei die Erzeugung des antistatischen Filmes ein getrenntes Beschichten des flüssigen Kunstharzes (2a, 2b) auf jeweilige Teile der anderen Oberfläche, radial nach außen und innen von der Umfangsrille (7) oder -erhöhung (9) gelegen, durch einen Prozeß umfaßt, der die Rille oder Erhöhung als eine Sperre für das Streuen des flüssigen Harzes verwendet, und auch ein Beschichten mit einem flüssigen Kunstharz (2c) aufweist, um die Umfangsrille (7) oder -erhöhung (9) zu bedecken.

11. Verfahren zum Herstellen einer optischen Platte nach Anspruch 9 oder Anspruch 10, bei dem der Prozeß Beschichten des flüssigen Kunstharzes (2a, 2b) auf den Teil der anderen Oberfläche, der radial außerhalb der Umfangsrille (7) oder -erhöhung (9) ist, durch Drehung des Substrates und dann ein Beschichten des flüssigen Kunstharz (2b) auf den Teil der anderen Oberfläche, der radial nach innen von der Umfangsrille (7) oder -erhöhung (9) durch Drehung umfaßt, wobei die Drehzahl während des Beschichtens auf dem inneren Teil niedriger als die diejenige während des Beschichtens auf dem äußeren Teil ist.

12. Verfahren zum Herstellen einer optischen Platte nach einem der Ansprüche 9 bis 11, bei dem die Drehzahl während des Beschichtens auf den inneren Teil 300 bis 800 U/min und die Drehzahl während des Beschichtens auf den äußeren Teil 2000 bis 4000 U/min betragen.

## Revendications

1. Disque de mémoire optique comprenant un substrat en forme de disque transmettant la lumière (1) constitué d'un matériau plastique moulé par injection, un film d'enregistrement formé sur une première surface dudit substrat, et un film antistatique (2) formé sur l'autre surface dudit substrat, caractérisé en ce que ladite autre surface inclut une rainure (7) ou une arête (9) circonférentielle formée volontairement sur le substrat à l'emplacement d'une jonction entre différentes pièces du moule où se formerait sinon une arête de défaut (8) dans ladite autre surface, ledit film antistatique incluant des première et seconde parties (2a, 2b) qui sont réalisées séparément par dépôt sur des parties respectives de ladite autre surface s'étendant radialement vers l'extérieur et vers l'intérieur de ladite rainure (7) ou arête (9) circonférentielle, lesdites parties de film antistatique ayant au moins une résistance de surface prédéterminée pour que ledit disque possède un pouvoir antistatique efficace.

2. Disque optique selon la revendication 1, dans lequel lesdites première et seconde parties (2a, 2b) dudit film antistatique s'étendent jusqu'à ladite rainure (7) ou arête (9) circonférentielle, et dans lequel une troisième partie (2c) du film antistatique est formée séparément dans la rainure (7) ou sur l'arête (9) et est en contact avec le bord radialement intérieur de ladite première partie (2a) et avec le bord radialement extérieur de ladite seconde partie (2b).

3. Disque de mémoire optique comprenant un substrat en forme de disque transmettant la lumière (1) constitué d'un matériau plastique moulé par injection, un film d'enregistrement formé sur une première surface dudit substrat, et un film antistatique (2) formé sur l'autre surface dudit substrat, caractérisé en ce que ladite autre surface inclut une rainure (7) ou une arête (9) circonférentielle formée volontairement sur le substrat à l'emplacement d'une jonction entre différentes pièces du moule où se formerait sinon une arête de défaut (8) dans ladite autre surface, ledit film antistatique incluant des première et seconde parties (2a, 2b) qui sont réalisées séparément par dépôt sur des parties respectives de ladite autre surface s'étendant radialement vers l'extérieur et vers l'intérieur de ladite rainure (7) ou arête (9) circonférentielle, et dans lequel une troisième partie (2c) du film antistatique est formée séparément dans la rainure (7) ou sur l'arête (9) et est en contact avec le bord radialement intérieur de ladite première partie (2a) et avec le bord radialement extérieur de ladite seconde partie (2b).

4. Disque optique selon l'une quelconque des revendications 1 à 3, comprenant également un moyeu central (3) qui est fixé à ladite seconde partie (2b) du film antistatique sur la partie radialement vers l'intérieur de ladite autre surface.

5. Disque optique selon la revendication 4, dans lequel ledit moyeu central (3) est revêtu aussi d'un film antistatique (4) et est fixé à ladite seconde partie (2b) du film antistatique mentionné en premier.

6. Disque optique selon l'une quelconque des revendications 1 à 5, dans lequel ledit film antistatique (2, 4) est formé d'une résine synthétique à laquelle est ajouté un oxyde d'étain dopé au phosphore en tant que matière d'apport électroconductrice.

7. Disque optique selon l'une quelconque des revendications 1 à 6, dans lequel une largeur d'ouverture de ladite rainure circonférentielle (7) a une dimension de 1,5 à 2,5 mm, une largeur inférieure de celle-ci a une dimension de 0,7 à 1,3 mm et une profondeur de celle-ci a une dimension de 0,1 à 0,2 mm.

8. Disque optique selon l'une quelconque des revendications 1 à 6, dans lequel une largeur inférieure de ladite arête circonférentielle (9) a une dimension de 1,5 à 2 mm, une largeur supérieure de celle-ci a une dimension de 0,7 à 1,3 mm et une hauteur de celle-ci a une dimension de 0,3 à 0,7 mm.

9. Procédé pour fabriquer un disque de mémoire optique en utilisant un substrat en forme de disque transmettant la lumière (1) constitué d'un matériau plastique moulé par injection, le procédé incluant la formation d'un film d'enregistrement sur une première surface du substrat et la formation d'un film antistatique (2) sur l'autre surface, ladite autre surface incluant une rainure (7) ou une arête (9) circonférentielle formée volontairement sur le substrat à l'emplacement d'une jonction entre différentes pièces du moule où se formerait sinon une arête de défaut (8) dans ladite autre surface, dans lequel la formation dudit film antistatique inclut le dépôt séparé d'une résine synthétique liquide sur des parties respectives de ladite autre surface s'étendant radialement vers l'extérieur et vers l'intérieur de ladite rainure (7) ou arête (9) circonférentielle au moyen d'une opération qui utilise ladite rainure ou arête comme une barrière pour la répartition de ladite résine synthétique, de façon à former des parties de film antistatique respectives (2a, 2b) ayant chacune au moins une résistance de surface prédéterminée.

10. Procédé pour fabriquer un disque de mémoire optique en utilisant un substrat en forme de disque transmettant la lumière (1) constitué d'un matériau plastique moulé par injection, le procédé incluant la formation d'un film d'enregistrement sur une première surface du substrat et la formation d'un film antistatique (2) sur l'autre surface, ladite autre surface incluant une rainure (7) ou une arête (9) circonférentielle formée volontairement sur le substrat à l'emplacement d'une jonction entre différentes pièces du moule où se formerait sinon une arête de défaut (8) dans ladite autre surface, dans lequel la formation dudit film antistatique inclut le dépôt séparé d'une résine synthétique liquide (2a, 2b) sur des parties respectives de ladite autre surface s'étendant radialement vers l'extérieur et vers l'intérieur de ladite rainure (7) ou arête (9) circonférentielle au moyen d'une opération qui utilise ladite rainure ou arête comme une barrière pour la répartition de ladite résine synthétique, et le dépôt aussi d'une résine synthétique liquide (2c) de façon à recouvrir ladite rainure (7) ou arête (9) circonférentielle.

11. Procédé pour fabriquer un disque optique selon la revendication 9 ou 10, dans lequel ladite opération comprend le dépôt de ladite résine synthétique liquide (2a) sur la partie de ladite autre surface qui est radialement vers l'extérieur de ladite rainure (7) ou arête (9) circonférentielle au moyen d'une rotation du substrat, et le dépôt ensuite de la résine synthétique liquide (2b) sur la partie de ladite autre surface qui est radialement vers l'intérieur de ladite rainure (7) ou arête (9) circonférentielle au moyen d'une autre rotation, dans lequel la vitesse de rotation pendant le dépôt sur la partie intérieure est inférieure à celle pendant le dépôt sur la partie extérieure.

12. Procédé pour fabriquer un disque optique selon l'une quelconque des revendications 9 à 11, dans lequel la vitesse de rotation pendant le dépôt sur la partie intérieure est de 300 à 800 tours/minute et la vitesse de rotation pendant le dépôt sur la partie extérieure est de 2000 à 4000 tours/minute.
